# EUROPEAN PATENT APPLICATION

(11) **EP 4 484 210 A1**
(43) Date of publication of application: **01.01.2025**
(21) Application number: 23182153.9
(22) Date of filing: 28.06.2023
(51) Int. Cl.: B60L 53/30, B60L 50/64, B60L 53/16, B60L 53/18

(54) **CONNECTOR LOCKOUT DEVICE**

(71) Applicant: VOLVO TRUCK CORPORATION, 405 08 Göteborg (SE)
(72) Inventor: ÖJERGREN, Johan, 442 37 KUNGÄLV (SE); BRIKELL, Niklas, 423 72 GÖTEBORG (SE); LEANDERSSON, Kenny, 416 73 GÖTEBORG (SE)
(74) Representative: Kransell & Wennborg KB

(57) **Abstract**

A lockout device (100) is provided, suitable for use with a connector for an automotive battery. The lockout device includes a base (110) including a protrusion (120) configured to receive a connector (140) and laterally retain the connector relative to the base, and a first aperture (130) configured to receive a shackle (152) of a padlock (150) to position at least a portion of the connector between the shackle and the protrusion such that the shackle retains the connector at the protrusion. A lockout arrangement and connector arrangement are also provided.

## Description

### TECHNICAL FIELD

The disclosure relates generally to maintenance safety for electrical installations in vehicles. In particular aspects, the disclosure relates to a connector lockout device usable to secure against reconnection of a connector, such as to a battery terminal. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

When performing various maintenance activities on a vehicle, it may sometimes be necessary to make sure that one or more electrical installations of the vehicle are disconnected and depowered before any work on the vehicle is started. Disconnecting an electrical installation may, for example, be performed by removing one or more terminal connectors at a vehicle battery, or similar. Once such a terminal connector has been disconnected, it can be of high importance to guarantee that the terminal connector is not, for example, accidentally reconnected again before an ongoing maintenance activity is finished, as such accidental reconnection may cause material and/or physical injuries.

As an example, in electric vehicles, whether power is allowed to transfer between high-voltage traction batteries and various electrical machines is often governed by one or more contactors. These contactors may in turn be controlled using control circuitry powered from lower-voltage (e.g. 12 V or 24 V) batteries. To avoid unintentionally closing the contactors during maintenance work, such as on the electrical machines, the control circuitry may be first depowered by removing a cable and its connector from the lower-voltage battery. If the connector is reconnected to the battery terminal before the maintenance work is completed, the contactors may close and result in injury to the vehicle's electronics and/or to the person performing the maintenance.

To avoid unintentionally reconnecting the connector, a connector lockout device may be used to prevent the connector from reconnecting to the battery terminal before the lockout device is opened. Such lockout devices may be difficult to operate, prone to failure, and/or difficult and expensive to manufacture.

### SUMMARY

To overcome at least some of the above-mentioned issues with contemporary lockout devices, the present disclosure provides an improved lockout device, lockout arrangement, and/or connector arrangement. Various alternatives of the improved lockout device, lockout arrangement, and/or connector arrangement are defined in and by the accompanying dependent claims.

According to a first aspect of the present disclosure, there is provided a lockout device which includes a base. The base includes a protrusion configured to receive a connector and laterally retain the connector relative to the base. The lockout device further includes a first aperture which is configured to receive a shackle of a padlock to position at least a portion of the connector between the shackle and the protrusion such that the shackle retains the connector at the protrusion. The first aspect of the disclosure may seek to reduce difficulty and cost to manufacture, and in particular reduces the number of moving parts needed to retain (and e.g. lock) the connector in the lockout device. A technical benefit may include that the envisaged lockout device is easier and/or less costly to manufacture, less prone to failure, and/or easier to operate.

Optionally in some examples, including in at least one preferred example, the connector may be for a terminal of an automotive/vehicle battery. A technical benefit may include that the lockout device is thus compatible with various types of connectors commonly used in vehicles.

Optionally in some examples, including at least one preferred embodiment, the protrusion may have a cylindrical or frustoconical shape to emulate the shape of a battery terminal as often found in automotive batteries. A technical benefit may include that the lockout device is thus particularly compatible with connectors configured to be mounted to such conical/tapered battery terminals/posts.

Optionally in some examples, including at least one preferred embodiment, the first aperture may be a hole or a notch. For example, such an aperture or notch may be dimensioned such that it matches an outer dimension of the shackle of a particular type of padlock that is to be used together with the lockout device, or such that it allows for a plurality of different types of padlocks to be used. A technical benefit of using a hole may include that it provides a more secure retaining of the padlock at the lockout device (once the padlock is closed), while a technical benefit of using a notch may include that it provides for an easier insertion and/or removal of the shackle of the padlock. With a notch, the geometry of the base and/or the lockout device is adapted such that with the shackle of the padlock received in the notch, and with the padlock closed, the shackle is retained in the notch and lockout device and prevented from being removed therefrom once the padlock is locked.

Optionally in some examples, including at least one preferred embodiment, the protrusion may extend away from the base in a first direction, and the first aperture may be arranged relative to the protrusion such that the shackle of the received padlock maintains the connector at the protrusion by directly restricting a movement of the connector (including also a connector with e.g. a protective cover, and/or with other parts provided together with the connector and not as part of the lockout device itself) relative to the base in the first direction.

Optionally in some examples, including at least one preferred embodiment, the protrusion may be configured to laterally retain the connector relative to the base by restricting a movement of the connector relative to the base in second and third directions perpendicular to each other and also to the first direction. A technical benefit may include to provide the ability of the lockout device to retain the connector at the protrusion.

Optionally in some examples, including at least one preferred embodiment, the base may further include a second aperture. A technical benefit may include that the shackle of the padlock may be held more securely in the lockout device by more than only a single aperture, and for example that a stress/strain on the lockout device caused by e.g. twisting or rotating of the padlock may be divided between the multiple apertures. In addition, two or more apertures instead of a single aperture may prevent the padlock from rotating in at least one direction.

Optionally in some examples, including at least one preferred embodiment, the base may include a first planar section from which the protrusion extends. The first aperture and the second aperture may both be provided through the first section. In other examples, including at least one other preferred embodiment, the first section may not necessarily be planar, but instead be bent or curved, as long as it includes both the first and second apertures and is configured such that the shackle of the padlock can be concurrently received by both the first and second apertures as described earlier herein. A technical benefit may include that, as highlighted in this paragraph, the base may then not necessarily include any other sections, which may make the base and thereby the lockout device particularly easy to manufacture. Also, in particular, whether the shackle of the padlock can be concurrently received in/through both apertures may be decided based on the orientation of the apertures relative to each other, and their relative positions, depending on e.g. the shape and size of the shackle of the padlock. Generally herein, it is envisaged that all apertures and other parts of the lockout device is to be configured to e.g. fit a particular type of padlock, or e.g. a particular series of padlocks, or similar, whose dimensions and geometry are known or at least predictable.

Optionally in some examples, including at least one preferred embodiment, the base may include a first section from which the protrusion extends, and a second section through/in which the first aperture is provided. The second section may join the first section at an ordinary angle. As used herein, an "ordinary angle" is an angle that is larger than zero degrees and less than 180 degrees, such as e.g. (0, 180), (0, 150], (0, 120], (0, 90], (0,60], (0,30] degrees, or similar. Phrased differently, the protrusion and the first aperture may be provided at different sections of the base, sections which may extend at an angle to each other. A technical benefit of having more than one such sections may include that the lockout device may be made more compact and/or with a smaller footprint.

Optionally in some examples, including at least one preferred embodiment, the second section may join the first section at a right angle (i.e. at 90 degrees). A technical benefit may include to allow the first aperture to be oriented along a direction (such as e.g. the second or third directions) that are perpendicular to the direction of the extension of the protrusion (e.g. the first direction), which may further enhance the ability of the lockout device to retain the connector on the protrusion.

Optionally in some examples, including at least one preferred embodiment, the second aperture may also be provided through the second section. A technical benefit may include that, by providing both apertures in a same section, the apertures may be arranged such that the padlock may be prevented from rotating in any direction (once received in both of the apertures).

Optionally in some examples, including at least one preferred embodiment, the base may further include a third section through which the second aperture is provided, and the third section may also join the first section at an ordinary angle (i.e. more than zero but less than 180 degrees). A technical benefit may include that, by providing the apertures in different sections, any stress/strain caused by e.g. bending, rotating or twisting the padlock may be more evenly distributed over the lockout device.

As used herein, the angle at which two sections intersect may also be larger than 180 degrees depending on how the angle is measured. As envisaged herein, such angles will also count as "ordinary angles", as long as the two sections intersect at some angle which makes the two sections not being e.g. in a single plane or similar.

Optionally in some examples, including at least one preferred embodiment, the third section may join the first section at a right angle (i.e. 90 degrees). A technical benefit may include that the lockout device is easier to manufacture, if using for example milling or additive manufacturing.

Optionally in some examples, including at least one preferred embodiment, the first aperture and the second aperture may be concentrically aligned. This may be possible e.g. if both the first and second sections joins the first section of the base at 90 degree angles, or similar. Phrased differently, the base may be U-shaped, with the protrusion arranged at the bottom, the first aperture in one of the legs, and the second aperture in the other leg, of such a U-shape. Other configurations of the various sections which allow for such concentricity of the first and second apertures are of course also possible, depending on the exact angles of intersection of the various sections and the angles/orientations of the first and second apertures. A technical benefit may include that if the first and second apertures are concentrical, insertion and removal of the shackle may be easier to perform.

Optionally in some examples, including at least one preferred embodiment, the protrusion may be provided on a first side of the first section. On a second side of the first section opposite to the first side, there may be provided a recess configured to receive a terminal of an automotive battery. A technical benefit may include that such a recess helps to maintain the lockout device at the automotive battery. For example, instead of attaching the connector to the battery terminal, the connector can be retained in the lockout device, and the lockout device may be positioned on the battery terminal.

Optionally in some examples, including at least one preferred embodiment, the recess may extend through the first section and into an inside of the protrusion. This may be made possible by the protrusion having a frustoconical outer shape, and by also making the inside of the recess having such a frustoconical shape, or similar. A technical effect may include that the lockout device is more compact and/or has a smaller footprint, as part of the otherwise unutilized volume of the protrusion is used to provide the recess.

Optionally in some examples, including at least one preferred embodiment, the base may further include one or more sidewalls extending from the base and configured to restrict a rotation of the connector around the protrusion. For example, the one or more sidewalls may extend in a same direction as the protrusion (e.g. in the z-direction). A technical effect may include that such one or more sidewalls helps to prevent (or limit) rotation of the connector around the protrusion.

Optionally in some examples, including at least one preferred embodiment, a size and position of the one or more sidewalls may be adapted to an outer shape of the connector in form of a connector including an integrated current sensor. Phrased differently, if the connector is such that it includes an integrated current sensor (which may be the case for contemporary battery connectors for e.g. automotive vehicles), the one or more sidewalls may be adapted to fit around an outer casing/cover of such a connector/current sensor, to prevent any or anything but minor rotation of the connector/current sensor around the protrusion (and around e.g. the first, e.g. z-, direction). A technical benefit may include that the lockout device is particular useful for vehicles in which there is an integrated current sensor on the connector which is to be removed from the battery during e.g. maintenance work. Another technical benefit may include that such sidewalls restricts (or prevents) the rotation also of connectors of a more simple type, such as standardized connectors for car batteries, with or without protection covers.

Optionally in some examples, including at least one preferred embodiment, the second section may form, or form part of, the one or more sidewalls. In other such embodiments, it may instead (or in addition) be the third section (if present) that forms, or forms part of, the one or more sidewalls. Phrased differently, any section of the base that is not the first section (e.g., any section of the base including an aperture, and which joins the first section at an ordinary angle) may form part of a same structure as that defining the one or more sidewalls. A technical benefit may include that both benefits of the aperture and one or more sidewalls are obtained in a single structure.

Optionally in some examples, including at least one preferred embodiment, a height of the one or more sidewalls may be lower than that of the second section. A technical benefit may include that the one or more sidewalls are manufacturable using less material, while still being able to provide a desired rotation-prevention or -reduction of the connector around the protrusion.

Optionally in some examples, including at least one preferred embodiment, the lockout device (or at least part of the lockout device) may be manufactured using additive manufacturing, such as e.g. various types of 3D-printing or similar. A technical benefit may be that the lockout device is particularly easy and cost-effective to produce. Other methods of manufacturing, such as extrusion, milling, casting, joining of several individual parts, or similar, are of course also possible, all with their own, individual technical benefits.

According to a second aspect of the present disclosure, there is provided a lockout arrangement. The lockout arrangement includes a lockout device according to the first aspect (or any example/preferred embodiment thereof as discussed and disclosed herein), and also the padlock. The second aspect may seek to provide the lockout device and the padlock as a single kit. A technical benefit may include that the configuration of the lockout device is optimized based on the known properties of the padlock, and vice versa, compared to if the lockout device is to accept several different types of padlocks, the properties of which may often be unknown.

Optionally in some examples, including at least one preferred embodiment, the lockout arrangement may further include a retainer configured to retain the padlock at the lockout device even when the shackle of the padlock is not received in the first aperture. The retainer may be a chain, rope, string, strap, belt, or any other entity suitable for attaching the padlock to the lockout device. A technical benefit may include that the retainer reduces a risk that the padlock is unintentionally lost or forgotten once its shackle is removed from the lockout device, or similar. Another technical benefit may include that the lockout device and padlock is both storable together and thereby ready for use when needed.

According to a third aspect of the present disclosure, there is provided a connector arrangement. The connector arrangement includes a connector for an automotive battery (i.e., a connector configured as being attachable to a terminal of the battery), and a lockout device according to the first aspect (or any example/preferred embodiment thereof as discussed and disclosed herein) or a lockout arrangement according to the second aspect (or any example/preferred embodiment thereof as discussed and disclosed herein). The third aspect may seek to provide the lockout device (arrangement) together with the connector. A technical benefit may include that the various properties of the lockout device (such as the exact shape and dimensions of the protrusion, the arrangement of the first and/or second apertures, etc.) are specifically tailored to known properties (such as the shape and dimensions) of the connector, which may optimize the functionality of the lockout device. In particular, if providing both the connector, the lockout device and the padlock as a single kit, a technical benefit may include that the various properties thereof may be adapted to fit together, and to thereby achieve a more optimal functionality of the lockout device with regards to its capability to, when working together with the connector an the padlock, prevent the received connector from escaping from the lockout device (especially when the padlock is closed).

Optionally in some examples, including at least one preferred embodiment, the connector arrangement may further include a retainer configured to retain the lockout device or lockout arrangement at at least one of the connector and a cable of the connector. The retainer may be e.g. chain, rope, string, strap, belt, or any other entity suitable for attaching the padlock to the lockout device. A technical benefit may include that the lockout device (arrangement) is kept at the cable/connector, where it is likely needed.

The disclosed aspects, examples (including any preferred examples), and/or accompanying claims may be suitably combined with each other as would be apparent to anyone of ordinary skill in the art. For example, within the scope of the present disclosure, all features and advantages described with reference to the lockout device of the first aspect are relevant to, and may be used in combination with, also any feature and advantage described with reference to the lockout arrangement of the second aspect and the connector arrangement of the third aspect, and vice versa. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings, in which:
**Figures 1A-1D** are perspective views which schematically illustrate a lockout device and the operation thereof according to an example;
**Figures 2A-2C** are perspective views which schematically illustrate a lockout device and the operation thereof according to another example;
**Figures 3A-3C** are perspective views which schematically illustrate a lockout device and the operation thereof according to yet another example;
**Figures 4A and 4B** are perspective views which schematically illustrate a lockout device and the operation thereof according to yet another example;
**Figures 5A and 5B** are perspective views which schematically illustrate a lockout device and the operation thereof according to yet another example, and
**Figure 6** is a perspective view which schematically illustrate a battery bay of a vehicle and how the envisaged lockout device can be used to secure one or more connectors from being accidentally reconnected.

### DETAILED DESCRIPTION

The detailed description set forth below provides information and examples of the disclosed technology with sufficient detail to enable those skilled in the art to practice the disclosure.

As will now be described in more detail, a lockout device (which may also be referred to as just "a device", etc.) provides a convenient way of securing a connector removed from, for example, a battery terminal, such that the connector may not be accidentally reconnected. This may thus help to prevent material and/or physical injury which may result from such accidental reconnection during, for example, maintenance work or similar. In particular, the envisaged lockout device has the advantage that it is easier to operate, contains very few parts, and/or reduces (e.g., eliminates) any need for movable parts, thereby providing a lockout device that is easier and cheaper to manufacture.

As used herein, that one part is "retained" relative to (or at) another part means that a relative movement between the parts is restricted (or even prevented) in at least one direction. To "retain a part at another part", without specifying any particular direction of retention, thereby means that the relative movement of the parts vis-a-vis each other is restricted (or even prevented) in sufficiently many directions to prevent the parts from being separable from each other, where "separable" means that the parts may be separated by an arbitrarily large distance. For example, two parts joined by a strap are not considered to be separable, as the finite length of the strap would prevent the two parts from being separated by more than the length of the strap.

As used herein, that one part is "locked" in/to another part means that the two parts may not be separated without first unlocking (e.g., using a combination or a key) the lock (e.g., padlock). As used herein, that a part is "secured" in/at/to another part means that there is a reduced or no risk of accidentally separating the parts under normal circumstances, without the use of excessive force and without malicious intent. As used herein, that one part "engages" another part means that the two parts come into physical contact.

As an example of the above definitions, a connector provided on a protrusion may be retained by the protrusion in a plane perpendicular to an extension of the protrusion, as the protrusion would restrict movement of the connector relative to the protrusion in this plane. The protrusion itself would however not be able of retaining the connector in a direction parallel with the extension of the protrusion, as the connector may (if not e.g. fastened to the protrusion using e.g. a screw and nut arrangement or similar) be removed from the protrusion by pulling the connector away from the protrusion in this direction. However, the shackle of the padlock may be used to retain the connector at the protrusion, if the shackle of the padlock is arranged such that it (when inserted into the first aperture) would sufficiently restrict movement of the connector in the direction parallel with the extension of the protrusion. The shackle would therefore be said to retain the connector at the protrusion. This because if attempting to remove the connector from the protrusion by pulling the protrusion in the direction parallel with the extension of the protrusion, the connector (or some part associated with the connector, such as a cover) would engage the shackle of the padlock and thereby be prevented from being removed from the protrusion. The connector would however still not be locked in the lockout device until the padlock is locked (using e.g. a key), as that would prevent removing the shackle of the padlock from the first aperture in order to then remove the connector from the protrusion.

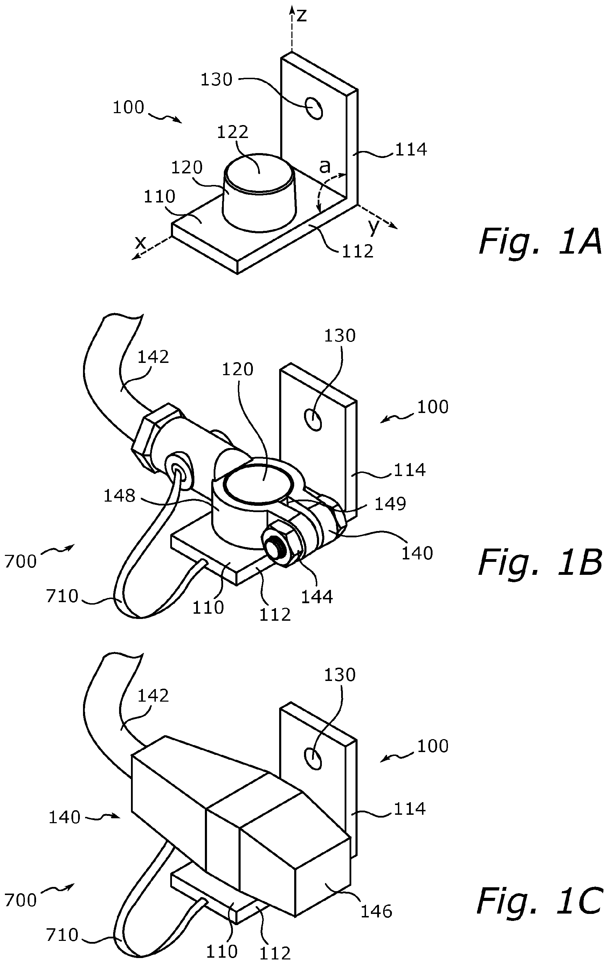

Figures 1A-1D illustrate examples of a lockout device 100. Referring to Figure 1A, the lockout device 100 has a base 110, which includes a protrusion 120. The protrusion is configured to receive a connector, and to laterally (i.e. in a plane perpendicular to an extension of the protrusion) retain the connector relative to the base 110. The lockout device 100 further includes a first aperture, here in form of a first hole 130. The first hole 130 is configured to receive a shackle of a padlock, to position at least a portion of the connector between the shackle and the protrusion 120 such that the shackle retains the (received) connector at the protrusion 120.

In this particular example, the protrusion 120 has a frustoconical shape with a flat surface 122. The base 110 is divided into a first section 112 and a second section 114. The first section 112 and the second section 114 joins (intersects) each other at an angle *a*. In this particular example, the angle *a* is a right angle (i.e., 90 degrees), such that the base 110 is generally L-shaped, although the angle *a* may be any other ordinary angle (e.g., an angle larger than zero, but less than 180 degrees) providing an orientation of the first hole 130 such that the distance between the protrusion 120 (and received connector, as will be described later herein) is less than a height of the protrusion 120. In this way, the shackle, once received in the first hole 130, can prevent the connector from being pulled away from the protrusion 120.

In this particular example, the protrusion 120 extends away from the base 110 and the first section 112 in a first direction z which is perpendicular to a plane of the first section 112. In other words, a longitudinal extension of the first section 112 is along a second direction x, and a transversal extension of the first section 112 is along a third direction y, which are both perpendicular to a longitudinal extension (i.e. the first direction z) of the protrusion 120 and also to each other. Due to having a finite thickness, the first section 112 also extends at least some in the first direction z.

The second section 114 also longitudinally extends in the first direction z, due to joining the first section 112 at the right angle *a*. The second section 114 also extend in the third direction y. In other words, a plane of the first section 112 is spanned by the second and third directions x and y, while a plane of the second section 114 is spanned by the first and third directions z and y, respectively.

In this particular example, the first aperture 130 (e.g., hole) is provided through the second section 114.

Referring to Figure 1B, a cable 142 and connector 140 for the cable 142 have been positioned on the protrusion 120. The connector 140 is of an ordinary type suitable for use with battery terminals of automotive batteries. As used herein, a "battery terminal" is what is commonly also referred to as a "battery post". Likewise, a "connector" is what is commonly also referred to as a "terminal connector". As also used herein, that the connector 140 is suitable for use with a terminal may include that the protrusion 120 of the base 110 is adapted to fit within such a connector 140. For example, the protrusion 120 may be configured to resemble part or whole of a battery terminal, such as an Auto Post Terminal (SAE terminal), Pencil Post Terminal (JIS/T3 type terminal), T1 terminal (DIN type terminal), or any other type of terminal for which the lockout device 100 is to be used.

For example, if the protrusion 120 has the shape of a battery terminal (such as a cylindrical or frustoconical shape, or similar), the connector 140 may be received in the lockout device 100 by inserting the protrusion 120 into the connector 140 (which is assumed to include at least one opening for receiving a battery terminal, such as the cavity 149), or by providing the connector 140 on the protrusion 120. The protrusion 120 may then block (or at least restrict) movement of the connector 140 in a radial direction of the protrusion 120. For example, if the first direction as discussed earlier above is a z-direction, the second and third directions may be x- and y-directions, or similar. Consequently, as envisaged herein, the configuration of the protrusion 120 and first hole (aperture) 130 may be such that with the connector 140 received on the protrusion 120 and the shackle 152 of the padlock 150 received in the first hole 130, the protrusion 120 and shackle 152 together prevents (or at least restricts) the movement of the connector 140 in all three spatial directions sufficiently to prevent the connector 140 from leaving the protrusion 120 and the lockout device 100 as long as the shackle 152 remains in the first hole 130. To make sure that the shackle 152 remains in the first hole 130, the padlock 150 can be locked and the connector 140 thereby locked in the lockout device 100.

The connector 140 includes a screw and nut combination 144 which normally allows to attach the connector 140 to the battery terminal by tightening of the screw and nut combination 144. Here, the screw and nut combination 144 may instead be used to attach the connector 140 to the protrusion 120. However, there may also be no attaching mechanism (such as the screw and nut combination 144), or any other attaching mechanism or configuration may be used, even one that does not attach the connector 140 to the protrusion 120 as long as the connector is retained in at least one direction, such as two directions (e.g., x and y). The connector 140 may for example be configured to attach to a battery terminal using other means, such as one or more springs, friction rings, or similar, and/or by providing a sufficiently tight fit between the connector and the battery terminal for the connector to remain at the battery terminal without the need for further attaching mechanisms. As noted above, a mechanism to attach the connector 140 to the protrusion 120 is not needed as long as the connector 140 is retained in two directions (e.g., x and y), such as by a connector wall 148 at least partly defining a cavity 149 to receive at least a portion of the protrusion 120.

Referring to Figure 1B, in this particular example, there is also provided strap 710 (i.e., a retainer), which is configured to retain the connector 140 (and thereby also the cable 142) at the lockout device 100, such that the lockout device is available at the cable 142 and connector 140 when needed. The lockout device 100, connector 140 and strap 710 may, if provided together, be seen as a connector arrangement 700. The strap 710 may be optional and not included in other examples, and the connector 100 may be provided as a separate part.

After the connector 140 engages the protrusion 120, such that the connector receives at least a portion of the protrusion, the connector 140 may (as will be described later herein) be further retained also in a direction parallel with the extension of the protrusion 140 by insertion of a shackle of a padlock in the first hole/aperture 130.

Referring to Figure 1C, the connector 140 may further include a protective cover 146. The cover 146 may be made of plastic, rubber, and/or any other electrically insulating material to reduce the risk of contact with the metallic parts of the connector 140 once the connector is mounted to the protrusion 120. Such a cover 146 may be provided on contemporary connectors for reducing risk of contact with the connector once the connector is mounted to a battery terminal, such as to reduce the risk of short-circuit and potential damages following therefrom. The cover 146 may be at least partly removable (e.g., by bending part of the cover 146 away from the connector 140) to allow access to the screw and bolt connection 144 such that this may be tightened before the cover 146 is brought back into normal shape. In other examples, the cover 146 may be made to cover also the screw and bolt connection 144, or similar. The lockout device 100 and other lockout devices envisaged herein may be configured to receive connectors with and/or without such covers, and the position of the aperture 130 relative to the protrusion 130 (in e.g. the z-direction) may be adjusted to make sufficient room also for such a cover between the protrusion 120 and the shackle 152 of the padlock 150.

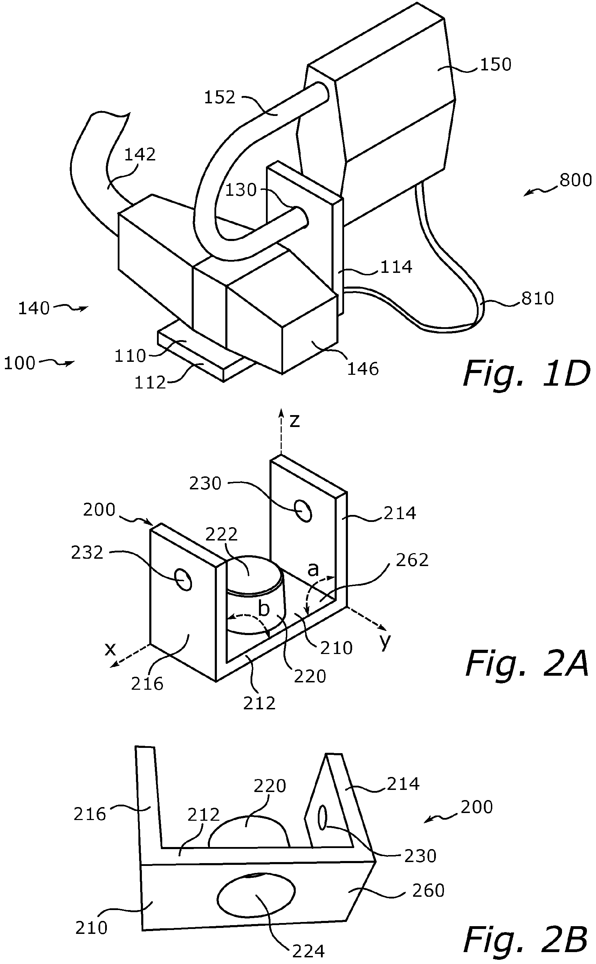

Referring to Figure 1D, a shackle 152 of a padlock 150 is inserted through the first hole 130. The position of the first hole 130 relative to the protrusion 120 is such that with the shackle 152 received in the first hole 130, the shackle 152 can retain the connector 140 (including the cover 146) at the protrusion 120, between the protrusion 120 and the shackle 152.

In this particular example, such retention is obtained by the shackle 150 restricting a movement of the connector 140 (and cover 146) in the first direction z (i.e. in the direction of the extension of the protrusion 120). There may, in some examples and depending on the exact configuration of the connector 140 and padlock 150 be some movement of the connector 140 allowed in the first direction z, but the connector 140 (and cover 146) will, if moved in the first direction z, eventually hit the shackle 152 of the padlock 150 before the connector 140 can leave the protrusion 120 and the lockout device 100.

Similarly, the protrusion 120 is configured such that with the connector 140 provided onto the protrusion 120 (that is, the protrusion 120 inserted in the connector 140), the protrusion 120 laterally retains the connector 140 relative to the base 110. In this particular example, this is obtained by the protrusion 120 blocking (or at least restricting) a movement of the connector 140 relative to the base 110 (and first section 112) in the second and third directions x and y, respectively.

The lockout device 100 is thus configured such that the protrusion 120, the first hole 130 and position of the first hole 130 relative to the protrusion 120, and the shackle 152 of the padlock 150, work together to retain the connector 140 at the protrusion 120. Locking the padlock 150 using a suitable key, keycode or similar (depending on the type of padlock 150) then prevents the shackle 152 from being removed from the first aperture 130. The lockout device 100 thereby serves (once the padlock 150 is locked) to lock the connector 140 in the lockout device 100 and thereby prevents the connector 140 from accidentally being reconnected at e.g. a battery terminal from which the connector 140 was previously removed.

As used herein, that the shackle 152 directly restricts the movement of the connector 140 rather than indirectly restricts movement (e.g., by locking a base and cover together) means that there are no intermediate parts of the lockout device 100 involved, and if the connector 140 is e.g. pulled in the first direction, the connector 140 (or e.g. a cover for the connector) comes engages with the shackle 152 of the padlock 150 and is thereby prevented from moving further in the first direction. The shackle 152 is positioned to directly engage at least a portion of the connector (directly or indirectly) if an attempt is made to remove the connector 140 from the protrusion 120. The first hole (aperture) 130 may be positioned relative to the protrusion 120 such that no or only some movement of the connector 140 in the first direction is allowed, but not such that the connector 140 may move enough in the first direction to leave the protrusion 120 and thereby the lockout device 100.

An aperture, such as the first hole 130 (or a notch, as will be exemplified later herein) may be dimensioned such that it matches an outer dimension of the shackle 152 of a particular type of the padlock 150 that is to be used together with the lockout device 100, or such that it allows for a plurality of different padlocks to be used.

In this and other examples herein, it may be advantageous to manufacture the lockout device 100 such that at least the surfaces thereof that are more likely to come into contact with a battery terminal are not of an electrically conductive material. In other examples, the lockout device 100 may be manufactured such that at least the surfaces of the lockout device 100 in contact with the connector 140 are not of an electrically conductive material, or similar. There may be advantages to manufacturing the lockout device 100 such that there is no electrically conductive path provided between a surface of the lockout device 100 more likely to come into contact with the battery terminal and/or the connector 140, either by including no electrically conductive materials in the protrusion 120 and the first section 110, and/or by at least providing at least some electrically insulating materials such that the conductor 140 is not electrically connected to e.g. an underside of the base 100 or similar.

The shackle of a padlock may be made of a metal, such that an electrical connection between the contactor 140 and the battery terminal may still be achieved by e.g. the shackle 150 coming into contact with the battery terminal if the connector has no protective cover 146 such as illustrated in Figures 1C and 1D. However, the lockout device 100 may still improve safety even for such cover-less connectors, as the lockout device 100 may prevent at least some situations wherein the contactor 140 could otherwise come into contact with the battery terminal, such as e.g. someone attempting to reconnect the connector to the battery terminal for non-malicious reasons, such as believing that the connector has accidentally been disconnected or similar. However, if the connector 140 includes a cover 146 as illustrated e.g. in Figures 1C and 1D, the above-discussed risk of accidental connection with the battery terminal can be reduced or even eliminated, as the cover 146 may reduce or remove the need for a protective cover around part of the shackle 152.

Referring to Figure 1D, the lockout device 100 may include a retainer 810 (here in form of a strap, even though such a retainer 810 may instead be e.g. a string, chain, wire, elastic band, or similar) which retains the padlock 150 at the lockout device 100, such that the padlock 150 and lockout device 100 may be provided together in a single kit and ready to be used. Figure 1C thus serves to illustrate also a lockout arrangement 800, which includes at least the lockout device 100 and the padlock 150, and here optionally also the retainer 810. In particular, in such a lockout arrangement 800, the padlock 150 may be configured such that the shackle 152 does not have an electrically conductive surface, as achieved e.g. by providing a rubber (or similar) sleeve on the shackle 152. By so doing, the risk of accidentally reconnecting the contactor 140 to the battery terminal by e.g. the padlock 150 into contact with the battery terminal is reduced or eliminated. In other embodiments, the strap 810 may be optional and the lockout device provided as a separate part.

Figures 2A-2C illustrate another example of a lockout device 200. Lockout device 200 provides at least some of the same functionality as the lockout device 100 described above with reference to Figures 1A-1D. Referring to Figure 2A, the lockout device 200 has a base 210 which includes a first section 212. On the first section 212, there is provided a protrusion 220 having a frustoconical shape with a surface 222, wherein the protrusion 220 extends away from the base 210 and the first section 212 in the first direction z. The lockout device 200 and the base 210 further include not just one but two additional sections, namely a second section 214 and a third section 216. Both the second and third sections 214 and 216 intersect/join the first section at angles *a* and *b*, respectively. In this particular example, these angles are both right angles (i.e. 90 degrees), making the base U-shaped.

The first section 212 longitudinally extends in the second direction x, and transversally extends in the third direction y. The first section 210 has a finite thickness, such that the first section 210 extends also to some extent in the first direction z. Both of the second and third sections 214 and 216 longitudinally extends in the first direction z, i.e. perpendicular from a plane spanned by the second and third directions x and y and including the first section 210. The second and third sections 214 and 216 also each transversally extends in the third direction y, and each has a finite thickness and thus also extends to some extent in the second direction x.

The second section 214 defines a first aperture 230. The third section 216 defines a second aperture 232. The first aperture may be a first hole 230 provided through the second section 214, and the second aperture may be a second hole 232 provided through the third section 216. The first and second holes 230 and 232 may be concentrically arranged, i.e. at a same height above the first section 212, and at a same distance in the third direction y. In other examples as envisaged herein, such concentricity may be obtained using other means, such as for example by arranging the holes at different heights above the first section 212, but with each hole still oriented along a same direction (i.e. a direction not parallel with any of the first, second and third directions x, y and z). The two holes 230 and 232 are arranged and configured such that a shackle of a padlock may be engaged with in both of the holes 230 and 232.

As mentioned earlier herein, a connector such as the connector 240 may include a screw and nut combination 244 intended to attach the connector 240 to a battery terminal. The screw and nut combination 244 may optionally be used also to attach the connector 240 to the protrusion 220, even though the shackle of the padlock will still be required to guarantee that the connector 240 does not leave the protrusion 220.

Referring also to Figure 2B, the lockout device 200 may be configured such that at a side 260 of the base 210 opposite to a side 262 at which the protrusion 220 extends away from the base 210, there is a recess or opening 224 which is configured to receive the terminal of the battery. The inside shape of the recess or opening 224 may be made to match an outer shape of the battery terminal, such that the lockout device 200 may be positioned on/at the battery terminal using the recess or opening 224. As described earlier herein, this may help to keep the lockout device 200 at a known position during maintenance work, and may also help to. reduce the risk of the lockout device 200 moving and thus coming into contact with other parts of the electrical installation of the vehicle, or similar. In some examples, the inside of the recess or opening 224 may be made from a non-electrically conductive material, to provide insulation between the connector 240 and the battery terminal.

In some envisaged examples, a lockout device having such a recess or opening 224 may be provided with one or more magnets arranged to fix the lockout device at the battery terminal in case the battery terminal is made of a material attracted to such magnets. This may help to further reduce the risk of the lockout device being lost.

It is to be noted that a recess or opening 224 may be provided as part of any example of a lockout device, and not only of the particular example lockout device 200. The recess or opening may of course also be optional, and also, if present, positioned at some other suitable part of the lockout device.

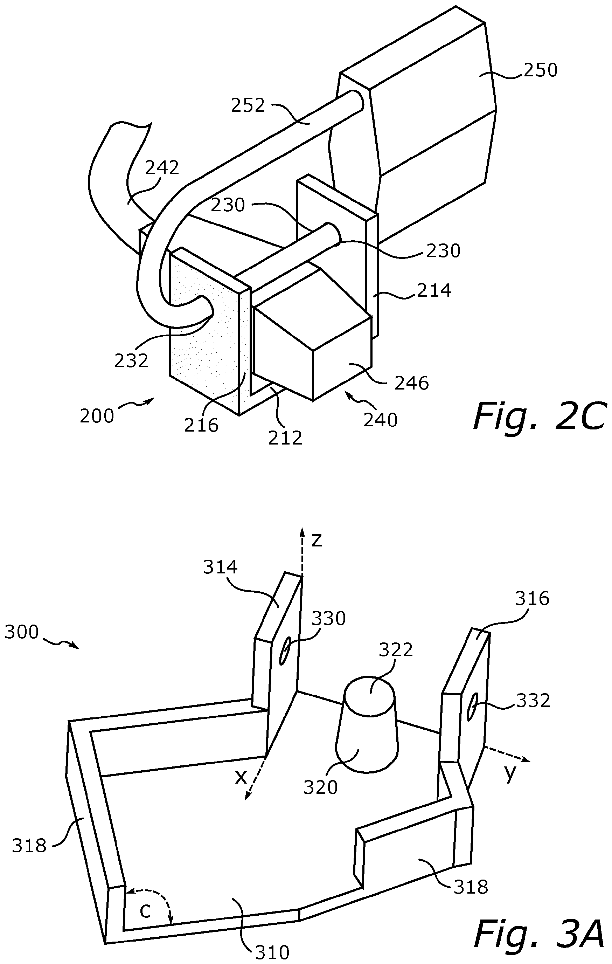

Referring to Figure 2C, a connector 240 of a cable 242 has been received on the protrusion 220, wherein the connector 240 has (in this example) a protective cover 246 as discussed earlier herein. As discussed above, not all connectors may have such covers, and it is envisaged that the lockout device 200 may be adjusted to account for such connectors, e.g. by reducing a distance between the aperture 230 and the protrusion 220 in the z-direction, or similar.

In this example, after receiving the connector 240 on the protrusion 220, a shackle 252 of a padlock 250 is concurrently positioned within the first hole 230 and the second hole 232. The protrusion 220 blocks (or at least restricts) the movement of the connector 240 (and cover 246) relative to the base 210 in the second and third directions x and y, while the arrangement of the holes 230 and 232 relative to the protrusion 220 are such that the received shackle 252 of the padlock 250 prevents (or restricts) movement of the connector 240 relative to the base 210 and protrusion 220 in the first direction z. Just as for the lockout device 100 illustrated in and described with reference to Figures 1A-1C, the lockout device 200 is also such that the interplay between the base 210, the protrusion 220, the holes 230 and 232, and the shackle 252 of the padlock 250 is such that protrusion 220 laterally retains the received connector 240 relative to the base 210, the shackle 252 retains (in the first direction z) the connector 240 at the protrusion 220, and the lockout device 200 thereby locks the received connector 240 in the lockout device 200 and helps to prevent accidentally reconnecting the connector 240 at a battery terminal.

Advantages of having two sections with the shackle 252 of the padlock 250 inserted through both holes 230 and 232, may include reducing the amount of stress and/or strain at the first hole 230 from attempting to rotate or bend the shackle 252, as the two holes (if concentrically arranged) allows to block a rotation of the shackle 252 around any direction other than the concentric axis of the two holes 230 and 232 (i.e., in the example of Figures 2A-2C, the concentric axis of the two holes 230 and 232 is an axis parallel with the second direction x). Having two holes instead of one may also help to make the lockout device 200 less prone to break if excessive force is applied to the shackle 252 in an attempt to forcefully remove the connector 240 from the lockout device 200.

Figures 3A-3C illustrate another example of a lockout device 300. Referring to Figure 3A, the lockout device 300 has a base 310 (e.g., a first section), from which there protrudes a protrusion 320 which has a frustoconical shape with a surface 322. Just like the lockout device 200 described with reference to Figures 2A-2C, the lockout device 300 has second and third sections 314 and 316 which intersect the base 310 at ordinary angles, and which include first and second apertures, respectively, in form of respective first and second holes 330 and 332. In addition, the base 310 has (one or more) sidewalls 318 which also extend from the base 310 in a same direction as that of the extension of the protrusion 320. In terms of the various directions x, y and z, in this particular embodiment, the base extends mainly in a plane spanned by the second and third directions x and y (although due to its finite thickness, the base of course also extends some in the first direction z). The second and third sections 314 and 316 each longitudinally extends in the first direction z, transversally extends in the second direction x, and also has (due to its finite thickness) some extension in the third direction y. The sidewalls 218 does not have a common longitudinal extension, but each extends along (at least part of) a perimeter of the base 210 and in the first direction z. In this particular example, the sidewalls each joins the base 310 at a right angle c.

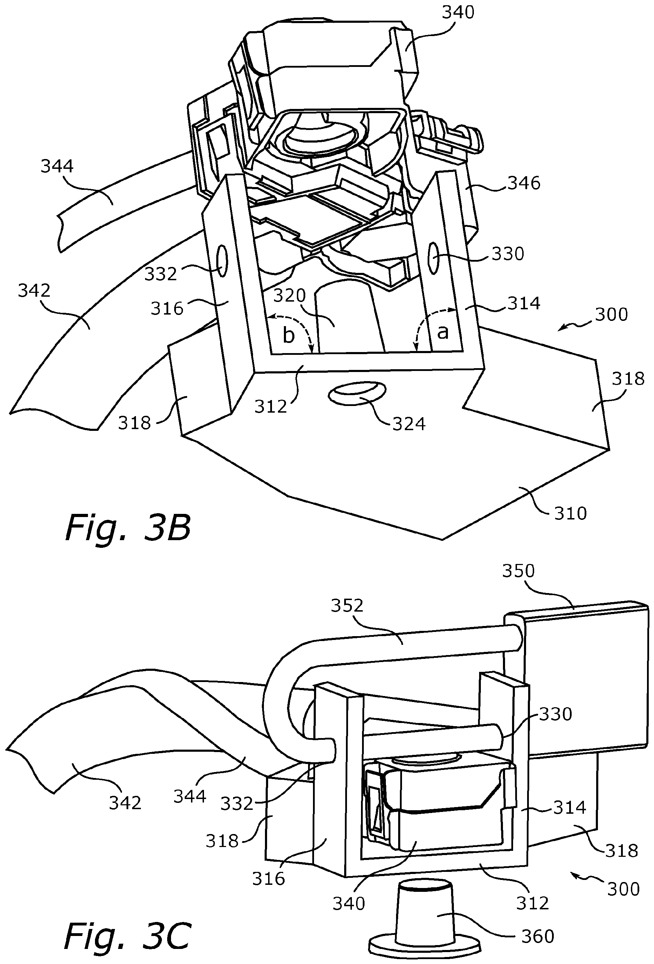

Referring to Figure 3B, a connector 340 to be locked by the lockout device 300 may have an integrated current sensor. There may be one cable 342 for power transfer between the battery and the vehicle, and another cable 344 for current sensing and/or signaling of a measured current through the cable 342 to e.g. a control circuit of the vehicle.

As a consequence, an outer shape of the connector 340 (e.g. a shape of a housing 346) may be more complex than that of other connectors. The sidewalls 318 have a size, shape and position configured to match the outer shape of the connector 340 and housing 346.

The lockout device 300 and the base 310 also have a recess or opening 324 on a side of the base 310 opposite to the side of the base 310 from where the protrusion 320 extends, and configured to receive a battery terminal as discussed earlier herein with reference to e.g. Figure 2C. The recess or opening 324 may of course be optional. Figure 3B also illustrates the ordinary angles *a* and *b* at which the second and third sections 314 and 316, respectively, joins the base 310. In this particular example, these angles are right angles (i.e. 90 degrees).

Referring to Figure 3C, the connector 340 is received at the protrusion 320, and a shackle 352 of a padlock 350 is concurrently received in the first and second holes 330 and 332. The lockout device 300 retains the connector 340 by preventing (or at least sufficiently limiting) movement of the connector 340 relative to the base 310 in the directions x, y and z. However, due to the presence of the sidewalls 318 and their adaption to the outer shape of the connector 340, the connector 340 is also further prevented (or at least sufficiently limited) from rotating around the protrusion 320 (not visible in Figure 3C), e.g. around an axis parallel with the first direction z. This may help to further reduce any strain or stress on the lockout device 300 caused by such rotations, and further help to more efficiently secure the connector 340 in the lockout device 300. Using the optional recess or opening 324, the lockout device 300 may be attached to the battery terminal 360 as discussed earlier herein.

In this particular example, as is particularly visible in Figure 3A, a height of the sidewalls 318 is less than a height of the second and third sections 314 and 316. This may be advantageous in that the lockout device 300 may then be manufactured using less material, while still providing sufficient rotation-prevention of the connector 340. In other examples, the height of the sidewalls 318 may be the same as that of the second and third sections 314 and 316, or e.g. higher. In such and other examples, all sidewalls 318 may not necessarily have a same height. Generally herein, the heights of the second and third sections may of course also be different, or equal, depending on the exact configuration of the lockout device.

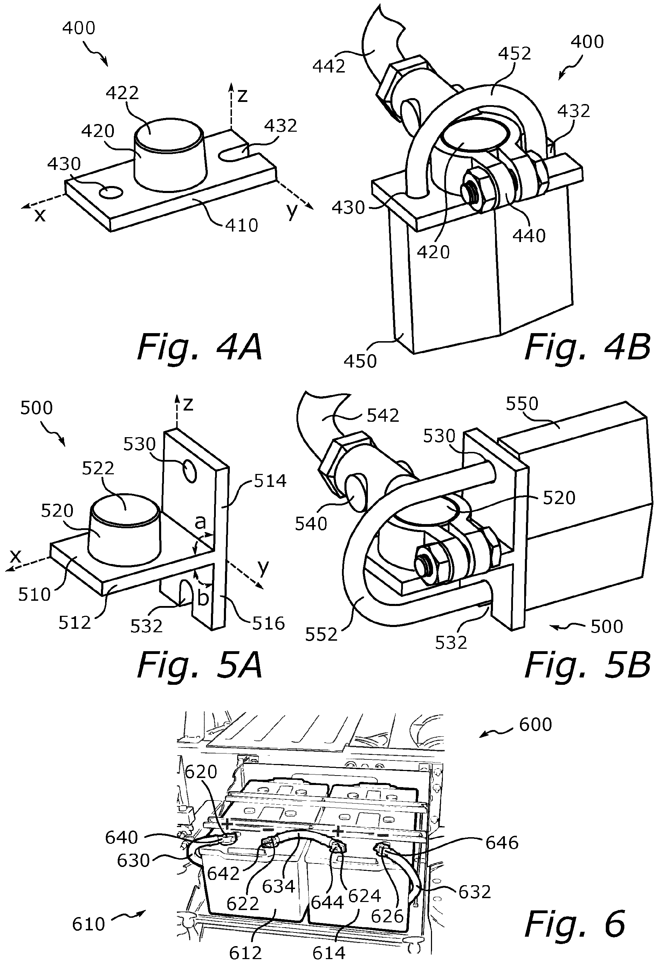

Figures 4A and 4B illustrate another example of a lockout device 400. Referring to Figure 4A, the lockout device 400 has a base 410, which includes a protrusion 420 (with a surface 422, due to being frustoconically shaped). However, in contrast with the other exemplary lockout devices 100, 200 and 300 described earlier herein, the base 410 includes only one section, through which first and second apertures 430 and 432 in form of a first hole 430 and a first notch 432 are, respectively, provided. The base 410 is flat, but may in other examples of course e.g. have a (slight) bending or curvature, if desired. It is, in any case, envisaged that the first hole 430 and first notch 432 are both oriented with their axis pointing e.g. along a same direction, such as along the first direction z, and such that a shackle of a padlock may be concurrently received in both the first hole 430 and the first notch 432. Using a notch instead of another hole as the second aperture 432 may have the advantage that it may be easier to insert the shackle 452 of the padlock 450 into the apertures in this configuration. With the padlock 450 locked, the shackle 452 may still be kept fixed in, and non-removable, from the lockout device 400. There may, in other examples, of course be a notch instead of a hole also for the first aperture 430, or the first hole 430 may be replaced by a notch while the first notch 432 is replaced with a hole, or similar. Generally herein, any combination and arrangement of suitable apertures may be used, as long as the two apertures may concurrently receive the shackle, and are arranged with respect to the protrusion such that at least part of the connector is positioned between the shackle (when received) and the protrusion in order to retain the connector at the protrusion (and in the lockout device).

Referring to Figure 4B, a connector 440 of a cable 442 is received at the protrusion 420, and the connector 440 is prevented from leaving the protrusion 420 and the lockout device 400 by a shackle 452 (of a padlock 450) that is concurrently received in both the first hole 430 and the first notch 432. In this particular example, the connector 420 has no protective cover, illustrating that lockout devices as envisaged herein may be used also for such connectors, although perhaps while offering reduced, but still some, protection against accidental or malicious reconnection.

Mainly, the lockout device 400 serves to illustrate that the desired functionality of a lockout device as envisaged herein, namely to retain the connector 440 in the lockout device 400 directly using the shackle 452 of a padlock 450, and the capability to lock the connector 440 in the lockout device 400 by locking the padlock 450, can be achieved in many different ways in terms of the exact configuration of the recited aperture(s), the protrusion, and with no, one or e.g. two additional sections to the base 410.

Figures 5A and 5B illustrate yet another example of a lockout device 500. Referring to Figure 5A, the lockout device 500 has a base 510 which includes a first section 512, a second section 514, and a third section 516. A protrusion 520 extends away from the first section 512 in the first direction z, and both the second and third sections 514 and 516 join/intersect the first section 512 of the base 510 at ordinary angles *a* and *b.* However, in contrast to any other exemplary lockout device discussed previously herein, the two sections 514 and 516 are now in a same plane (spanned e.g. by the first direction z and the third direction y). Herein, the second and third sections 514 and 516 may just as well be referred to as a same, second section, or similar, even though they will still be referred to as individual sections in what follows.

A first aperture in terms of a first hole 530 is provided through the second section 514, and a second aperture in terms of a first notch 532 is provided through/in the third section 516. The first hole 530 and the first notch 532 are arranged and oriented to concurrently receive a shackle of a padlock. Just like for the lockout device 400, using a notch instead of a hole as the second aperture 532 may help to more easily insert the shackle of the padlock in such a configuration of the lockout device 500. As mentioned when discussing Figures 4A and 4B, other exemplary lockout device may instead have two notches and no holes, or interchange the positions of the hole and the notch, or similar.

The first section 512 thus extends mainly in a plane spanned by the second and third directions x and y, but also has a slight extension in the first direction z due to having a finite thickness. The second and third sections 514 and 516 longitudinally extend in the first direction and transversally in the third direction y (i.e. in a plane spanned by the first and third directions z and y), but also have slight extensions in the second direction x due to having finite thicknesses.

Referring to Figure 5B, a connector 540 (illustrated as having no protective cover) of a cable 542 is received on/at the protrusion 520, and a shackle 552 of a padlock 550 is concurrently received in the first hole 530 and the first notch 532. Also in this exemplary lockout device 500, the lockout device 500 is configured such that the received shackle 552 of the padlock 550, in combination with e.g. the protrusion 520 and base 510, directly locks the connector 540 in the lockout device by preventing (or at least sufficiently limiting) movement of the connector 540 relative to the base 510 and protrusion 520 in all of the directions x, y and z.

Figure 6 illustrates an example of an environment in which the envisaged lockout device is usable, in form of a battery bay 610 of a vehicle 600 such as a heavy vehicle/truck. In this particular example, the battery bay 610 includes two batteries 612 and 614 (such as for example two 12 V or 24 V batteries or similar).

A cable 634 is used to connect the two batteries 612 and 614 in series, and has two connectors 642 and 644. The connector 642 is connected to a negative battery terminal 622 of the battery 612, while the connector 644 is connected to a positive battery terminal 624 of the other battery 614. At least one electrical installation of the vehicle 600 is connected to the batteries 612 and 614 via cables 630 and 632. The cable 630 is a positive cable, and has a connector 640 connected to a positive terminal 620 of the battery 612, while the cable 632 has a connector 646 connected to a negative terminal 626 of the other battery 614. Consequently, the two batteries 612 and 614 are connected in series, such that the at least one electrical installation of the vehicle 600 may utilize the combined voltage of both batteries 612 and 614.

As envisaged herein, the at least one electrical installation of the vehicle 600 may need to be depowered before maintenance work is performed on this or any other electrical installation, by disconnecting at least one of the terminals 640 and 646. Once such a terminal has been disconnected, it may be important that the terminal is not (e.g. accidentally) reconnected before the maintenance work has been completed. By not just disconnecting the terminal and leaving it hanging free, the present disclosure envisages that the disconnected terminal is instead secured in an improved lockout device as presented herein, as illustrated in any of the accompanying drawings. The person performing the maintenance may carry an own lockout device and an own padlock to which access is limited, preferably to only the maintenance person or e.g. a supervisor. Before starting any work, the maintenance person may disconnect the suitable connector from the battery bay 610, position the connector on/at the protrusion of the lockout device, and then directly lock the connector in the lockout device by inserting a shackle of the padlock and then locking the padlock. By such a simple procedure, another person may be prevented from (accidentally) reconnecting the connector to the battery while the maintenance person is still working, and thus reducing the risk of both physical and material injury. As envisaged herein, the lockout device may contain a tag or similar indicating the type of maintenance work that is currently being performed, who is performing the work, and e.g. contact information for such a maintenance person or e.g. a supervisor.

In summary of all of the above, it has thus been presented herein an improved lockout device (suitable for use with e.g. a connector for a battery terminal of an automotive battery or similar), which is easy and cost-effective to manufacture due to having few parts and no moving parts, and which allows for a simple locking of a connector in the lockout device using a process which requires only a few steps.

The following is a list of examples of lockout devices, lockout arrangements and connector arrangements as envisaged herein.

Example 1: A lockout device including a base, the base including a protrusion configured to receive a connector and laterally retain the connector relative to the base, and a first aperture configured to receive a shackle of a padlock to position at least a portion of the connector between the shackle and the protrusion such that the shackle retains the connector at the protrusion.

Example 2: The lockout device of example 1, wherein the connector is for a terminal of an automotive battery.

Example 3: The lockout device of example 1 or 2, wherein the aperture is a hole or a notch.

Example 4: The lockout device of any one of examples 1 to 3, wherein the protrusion extends away from the base in a first direction, and wherein the aperture is arranged relative to the protrusion such that the shackle of the received padlock maintains the connector at the protrusion by directly restricting a movement of the connector relative to the base in said first direction.

Example 5: The lockout device of any one of examples 1 to 4, wherein the protrusion is configured to laterally retain the connector relative to the base by restricting a movement of the connector relative to the base in second and third directions (x, y) perpendicular to each other and also to the first direction.

Example 6: The lockout device of any one of examples 1 to 5, wherein the protrusion has a cylindrical or frustoconical shape.

Example 7: The lockout device of any one of examples 1 to 6, where the base further comprises a second aperture, and wherein the first aperture and the second aperture are arranged to concurrently receive the shackle of the padlock.

Example 8: The lockout device of any one of examples 1 to 7, wherein the base comprises a first planar section from which the protrusion extends, and wherein said first aperture and said second aperture are both provided through the first section.

Example 9: The lockout device of any one of examples 1 to 8, wherein the base comprises a first section from which the protrusion extends, and a second section through which the first aperture is provided, and wherein the second section joins the first section at an ordinary angle.

Example 10: The lockout device of any one of examples 1 to 9, wherein the second sections joins the first section at a right angle.

Example 11: The lockout device of any one of examples 1 to 10, wherein the second aperture is also provided through the second section.

Example 12: The lockout device of any one of examples 1 to 11, wherein the base further includes a third section through which the second aperture is provided, and wherein the third section also joins the first section at an ordinary angle.

Example 13: The lockout device of any one of examples 1 to 12, wherein the third section joins the first section at a right angle.

Example 14: The lockout device of any one of examples 1 to 13, wherein the first aperture and the second aperture are concentrically aligned.

Example 15: The lockout device of any one of examples 1 to 14, wherein the protrusion is provided on a first side of the first section, and wherein, on a second side of the first section opposite to the first side, there is provided a recess or opening configured to receive a terminal of an automotive battery.

Example 16: The lockout device of any one of examples 1 to 15, wherein the recess or opening extends through the first section and into an inside of the protrusion.

Example 17: The lockout device of any one of examples 1 to 16, wherein the base further includes one or more sidewalls extending from the base, and configured to restrict a rotation of the connector around the protrusion.

Example 18: The lockout device of any one of examples 1 to 17, wherein a size and position of the one or more sidewalls are adapted to an outer shape of the connector in form of a connector including an integrated current sensor.

Example 19: The lockout device of any one of examples 1 to 18, wherein the second section forms, or forms part of, the one or more sidewalls.

Example 20: The lockout device of any one of examples 1 to 19, wherein a height of the one or more sidewalls is lower than that of the second section.

Example 21: The lockout device of any one of examples 1 to 20, manufactured using additive manufacturing.

Example 22: A lockout arrangement, including the lockout device of any one of examples 1 to 21 and the padlock.

Example 23: The lockout arrangement of example 22, further including a retainer configured to attach the padlock to the lockout device even when the shackle of the padlock is not received in the first aperture.

Example 24: A connector arrangement, including a connector for an automotive battery and the lockout device of any one of examples 1 to 21 or the lockout arrangement of example 22 or 23.

Example 25: The connector arrangement of example 24, further including a retainer configured to attach the lockout device or lockout arrangement to at least one of the connector and a cable of the connector.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the lockout device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A lockout device (100, 200, 300, 400, 500), comprising:
a base (110, 210, 310, 410, 510) comprising a protrusion (120, 220, 320, 420, 520) configured to receive a connector (140, 240, 340, 440, 540, 646) and laterally retain the connector relative to the base, and
a first aperture (130, 230, 330, 430, 530) configured to receive a shackle (152, 252, 353, 452, 552) of a padlock (150, 250, 350, 450, 550) to position at least a portion of the connector between the shackle and the protrusion such that the shackle retains the connector at the protrusion.

2. The lockout device according to claim 1, wherein said connector is for a terminal (360, 626) of an automotive battery (614).

3. The lockout device according to claim 1 or 2, wherein the protrusion has a cylindrical or frustoconical shape.

4. The lockout device according to any one of claims 1 to 3, wherein the base further comprises a second aperture (232, 332, 432, 532), and wherein said first aperture and said second aperture are arranged to concurrently receive the shackle of the padlock.

5. The lockout device according to any one of the preceding claims, wherein the base comprises a first planar section (112, 212, 312, 412, 512) from which the protrusion extends, and wherein said first aperture and said second aperture are both provided through the first section.

6. The lockout device according to any one of claims 1 to 4, wherein the base comprises a first section (112, 212, 312, 412, 512) from which the protrusion extends, and a second section (114, 214, 314, 414, 514) through which the first aperture is provided, and wherein the second section joins the first section at an ordinary angle (a).

7. The lockout device according to claims 4 and 6, wherein said second aperture is also provided through the second section.

8. The lockout device according to claims 4 and 6, wherein the base further comprises a third section (216, 316, 516) through which said second aperture is provided, and wherein the third section also joins the first section at an ordinary angle (b).

9. The lockout device according to claim 8, wherein the first aperture and the second aperture are concentrically aligned.

10. The lockout device according to any one of the preceding claims, wherein the protrusion is provided on a first side of the first section, and wherein, on a second side of the first section opposite to the first side, there is provided a recess (224, 324) configured to receive a terminal (360, 626) of an automotive battery.

11. The lockout device according to any one of the preceding claims, wherein the base further comprises one or more sidewalls (318) extending from the base, and configured to restrict a rotation of the connector around the protrusion.

12. The lockout device according to claim 11, wherein a size and position of said one or more sidewalls are adapted to an outer shape (346) of the connector in form of a connector (340) comprising an integrated current sensor.

13. The lockout device according to claim 11, or 12, depending on claim 6, wherein the second section forms, or forms part of, said one or more sidewalls.

14. The lockout device according to any one of claims 11 to 13 depending on claim 6, wherein a height of the one or more sidewalls is lower than that of the second section.

15. The lockout device according to any one of the preceding claims, manufactured using additive manufacturing.
